# EUROPÄISCHE PATENTSCHRIFT

(11) **EP 0 725 518 B1**
(45) Veröffentlichungstag und Bekanntmachung des Hinweises auf die Patenterteilung: **25.07.2001**
(21) Anmeldenummer: 96101456.0
(22) Anmeldetag: 02.02.1996
(51) Int. Cl.: H04L 12/43, H04L 29/02, H04B 1/20, B60R 16/02

(54) **Verfahren zur gemeinsamen Übertragung von digitalen Quell- und Steuerdaten zwischen über Datenleitungen verbundenen Datenquellen und -senken**
Method for combined transmission of digital source and control data between data sources and sinks linked by data transmission lines
Procédé pour la transmission combinée de signaux numériques de données de source et de contrôle entre des sources et des récepteurs de données reliés par des lignes de transmission

(30) Priorität: 02.02.1995 DE 19503207
(43) Veröffentlichungstag der Anmeldung: 07.08.1996
(73) Patentinhaber: BECKER GmbH, D-76307 Karlsbad (DE)
(72) Erfinder: Heck, Patrick, D-76448 Durmersheim (DE); Hetzel, Herbert, D-76356 Weingarten (DE)
(74) Vertreter: Patentanwälte Westphal, Mussgnug & Partner

(56) Entgegenhaltungen:
- EP-A- 0 519 111

## Beschreibung

Die Erfindung betrifft ein Verfahren zur gemeinsamen Übertragung von digitalen Quellund Steuerdaten zwischen über Datenleitungen verbundenen Datenquellen und -senken, bei dem die Quell- und Steuerdaten in einem Format übertragen werden, welches eine getaktete Folge von einzelnen Bitgruppen gleicher Länge vorschreibt. Weiterhin ist die Erfindung auf die Verwendung eines solchen Verfahrens gerichtet.

Die vorliegende Erfindung zeigt ein Netzwerk mit ringförmiger Architektur, bei dem die Datenquellen und Datensenken bildenden Teilnehmer durch eine einzige Datenleitung verbunden sind. Über diese Datenleitung werden die Quell- und Steuerdaten in einem zu einem Taktsignal synchronen kontinuierlichen Datenstrom übertragen. Das Taktsignal wird von einem einzigen Teilnehmer generiert. Alle anderen Teilnehmer synchronisieren sich auf dieses Taktsignal. Davon zu unterscheiden sind rein asynchrone Datenübertragungungsverfahren, wie paketorientierte Datenübertragungsverfahren z.B. ATM-Verfahren.

Verfahren dieser Art werden überall dort eingesetzt, wo verschiedenartige elektrische und elektronische Geräte, die untereinander Informationen austauschen sollen, in teilweise komplizierter Weise mittels Datenleitungen miteinander vernetzt sind. So kann beispielsweise im Audiobereich die Kommunikation zwischen miteinander vernetzten Datenquellen einerseits, wie zum Beispiel CD-Spielern, Radioempfängern und Kassettenrekordern, und den damit verbundenen Datensenken andererseits, wie beispielsweise Verstärker-Lautsprecher-Kombinationen, durch ein solches Verfahren gesteuert werden.

Mit der Entwicklung der CD-Spieler hat sich als Übertragungsformat das sogenannte "SPDIF-Format (Sony/Philips-Digital-Interface-Format)" das auch unter der Bezeichnung IEC 958 bekannt ist, als Standard durchgesetzt. Dieses Format schreibt eine Übertragung der Daten in einem aus zwei Subframes bzw. Bitgruppen bestehenden Frame vor, wobei jeder Subframe aus einer Präambel von vier Bits für Steuerdaten, daran anschließenden 24 Bits für Quelldaten und abschließend vier Bits für spezielle Steuerdaten besteht. Jeweils ein Subframe eines Frames ist dem linken Audiokanal und der andere Subframe dem rechten Audiokanal zugeordnet.

Da sich der starre Aufbau dieses Formats bei der Datenübertragung in komplexen Kommunikationssystemen als nachteilig erwiesen hat, wurde gleichzeitig mit dieser Anmeldung vom selben Anmelder eine Anmeldung mit dem Titel "Verfahren zur gemeinsamen Übertragung von digitalen Quell- und Steuerdaten zwischen über Datenleitungen verbundenen Datenquellen und -senken" eingereicht, in der ein wesentlich flexibleres Format zur Datenübertragung beschrieben ist.

Ein Verfahren gemäß den Merkmalen des Oberbegriffs von Anspruch 1 wird außerdem in der EP-A-0 519 111 beschrieben.

Grundsätzlich haben all diese Verfahren gemeinsam, daß vor der Übertragung sowohl Quell- als auch Steuerdaten in ein fest vorgegebenes Format umgesetzt werden müssen. Dies kann zum einen zeitaufwendig sein und bei zeitkritischen Anwendungen zu nicht vertretbaren Verzögerungen führen. Zum anderen können mit einem vorgegebenen Übertragungsformat nur Steuerdaten übertragen werden, die für die Übertragung mit diesem Format definiert sind, das heißt, die in dem die einzelnen Steuerdaten umfassenden "Befehlssatz" des jeweiligen Übertragungsformates enthalten sind. Darüber hinaus ist die Länge der übertragbaren Datenwörter durch die Länge der einzelnen Bitgruppen beschränkt.

Aufgabe der Erfindung ist es, ein Verfahren zur gemeinsamen Übertragung von digitalen Quell- und Steuerdaten anzugeben, bei dem Daten beliebiger Art und Länge schnell und flexibel von einem Gerät zu einem anderen übertragen werden können.

Gelöst wird diese Aufgabe nach der Erfindung dadurch, daß in jeder Bitgruppe zumindest eine Bitposition für die Übertragung unformatierter Daten reserviert ist, wobei die unformatierten Daten bitweise den reservierten Bitpositionen aufeinanderfolgender Bitgruppen zugewiesen und abhängig von den Steuerdaten einer bestimmten Datenquelle/Datensenke zugeordnet werden.

Durch die unformatierte Übertragung der Daten an reservierten Bitpositionen aufeinanderfolgender Bitgruppen können zum einen Daten beliebiger Länge übertragen werden. Zum anderen erfolgt keine Umsetzung der Daten in eine dem Übertragungsformat angepaßte Struktur, wodurch eine durch eine Umsetzung bedingte zeitliche Verzögerung bei der Übertragung entfällt. Weiterhin können Steuerdaten übertragen werden, die nicht in dem die einzelnen Steuerdaten umfassenden "Befehlssatz" des Übertragungsformats enthalten sind. Diese für das Übertragungsformat unbekannten Steuerdaten werden abhängig von den "regulären" Steuerdaten des Übertragungsformates einem oder mehreren bestimmten Empfangsgeräten zugeordnet und direkt von diesen ausgewertet.

Das Verfahren ist dabei nicht auf die Übertragung von Audiodaten beschränkt, sondern kann zur Übertragung beliebiger Daten, wie zum Beispiel Fax-Daten, Statusdaten, Telefonkarten-Daten oder sonstiger Steuerdaten verwendet werden. So können beispielsweise neben den eingangs erwähnten Audiogeräten auch Videokameras, Video-CD-Spieler, Telefone, Faxgeräte, Mikrofone, CD-Roms oder auch Computer-Festplatten miteinander vernetzt sein. Darüber hinaus können, insbesondere in Kraftfahrzeugen, auch Steuerungs- und Überwachungsgeräte in das Netzwerk einbezogen sein. So ist beispielsweise eine Aufnahme von Überwachungsgeräten für die Funktion von Außenleuchten oder den Reifenluftdruck oder von Geräten für die Messung oder die Steuerung der Motordrehzahl oder des Ladedrucks eines Turboladers möglich. Auf diese Weise kann beispielsweise bei fallendem Reifenluftdruck das Audiosystem einen gespeicherten Text als Warnung über die Lautsprecher abgeben.

Nach einer vorteilhaften Ausführungsform der Erfindung wird jeweils zu Beginn der Übertragung unformatierter Daten eine Anfangskennung als Steuerdatum übertragen. Dadurch ist auf einfache Art für jeden Empfänger der Anfang der unformatierten Daten erkennbar.

Nach einer weiteren bevorzugten Ausführungsform wird jeweils zu Beginn der Übertragung unformatierter Daten die Länge der unformatierten Datenfolge als Steuerdatum übertragen. Auf diese Weise ist für jeden Empfänger auf einfache Art das Ende der unformatierten Daten bestimmbar. Nach einer anderen Ausführungsform kann jeweils am Ende der Übertragung unformatierter Daten eine Ende-Kennung als Steuerdatum übertragen werden, so daß auf diese Weise das Ende der unformatierten Daten gekennzeichnet ist. Wird neben der Anfangs-Kennung sowohl die Länge als auch eine Ende-Kennung übertragen, so kann die redundante Information zur Erkennung von Übertragungsfehlern verwendet werden.

Nach einer weiteren vorteilhaften Ausführungsform wird jeder Datensenke eine eindeutige Adresse zugeordnet, und jeweils zu Beginn der Übertragung unformatierter Daten die Adresse der Datensenke, für die die unformatierten Daten bestimmt sind, als Steuerdatum übertragen. Anhand der übertragenen Adresse erkennt somit die entsprechende Datensenke, daß sie Empfänger der unformatierten Daten ist und beginnt mit dem Auslesen dieser Daten.

Falls die unformatierten Daten für verschiedene Datensenken gemeinsam bestimmt sind, können vorteilhaft zu Beginn der Übertragung die Adressen dieser als Empfänger vorgesehenen Datensenken als Steuerdaten übertragen werden.

Nach einer weiteren zweckmäßigen Ausführungsform wird insbesondere zusätzlich jeder Datenquelle eine eindeutige Adresse zugeordnet und jeweils zu Beginn der Übertragung unformatierter Daten die Adresse der Datenquelle, die die unformatierten Daten aussendet, als Steuerdatum übertragen. Falls die Daten einer bestimmten Datenquelle immer an dieselben Datensenken übertragen werden sollen, können diese aufgrund der übertragenen Adresse der Datenquelle erkennen, daß sie als Empfänger der unformatierten Daten bestimmt sind.

Weiterhin kann es auch bei einer Übertragung der Adresse der Datensenke sinnvoll sein, gleichzeitig die Adresse der Datenquelle mit zu übertragen. Auf diese Weise kann die Datensenke erkennen, von welcher Datenquelle die Daten an sie übertragen werden.

Die für die Zuordnung und Auswertung der unformatierten Daten benötigten Steuerdaten, wie zum Beispiel Anfangs-Kennung, Ende-Kennung, Länge oder Adresse der Datenquelle/Datensenke, können jeweils vollständig in einer Bitgruppe abgelegt werden. Sie können aber auch ähnlich der Übertragung der unformatierten Daten in dafür vorgesehenen Kontrollbits mehrerer aufeinanderfolgender Bitgruppen aufgesplittet abgelegt werden. Es ist auch möglich diese Steuerdaten zu Beginn der Übertragung der unformatierten Daten in den für deren Übertragung reservierten Bitpositionen abzulegen.

Nach einer weiteren bevorzugten Ausführungsform werden als Datenleitungen Lichtwellenleiter und/oder elektrische Leitungen verwendet. Insbesondere bei der Verwendung von Lichtwellenleitern ist eine Datenübertragung mit sehr hoher Geschwindigkeit möglich. Darüber hinaus führt die Verwendung von Lichtwellenleitern zu einem besonders geringen Gewicht und damit zu einer guten Einsetzbarkeit insbesondere in mobilen Systemen, wie zum Beispiel in einem Kraftfahrzeug.

Vorteilhaft wird das Verfahren bei einem Kommunikationssystem, das mehrere über ein insbesondere ringförmiges aufgebautes Netzwerk miteinander verbundene Teilnehmer umfaßt, zur unformatierten Übertragung von Daten eines Teilnehmers über das Netzwerk an einen anderen Teilnehmer verwendet. Auf diese Weise können in einem ersten Teilnehmer erzeugte Daten unformatiert über das Netzwerk zu einem zweiten Teilnehmer übertragen werden, von dem sie ausgelesen werden und in dem sie eine gewünschte Funktion auslösen. So können beispielsweise durch das Drücken der Wiedergabetaste eines CD-Spielers erzeugte Daten unformatiert über das Netzwerk zu einem Kassettenrekorder übertragen werden, von dem sie ausgelesen werden und in dem sie einen synchronen Aufnahme-Start auslösen.

Dabei müssen die beiden Netzteilnehmer nicht notwendigerweise unmittelbar miteinander verbunden sein, sondern die unformatierten Daten können auch durch dazwischenliegende Teilnehmer durchgeschleift werden, die nicht als Empfänger bestimmt sind.

Vorteilhaft handelt es sich bei dem Kommunikationssystem um ein mobiles Kommunikationssystem, insbesondere um ein Kommunikationssystem in einem Kraftfahrzeug. Gerade die steigende Anzahl der in einem Kraftfahrzeug verwendeten elektronischen Geräte und die notwendige Kommunikation zwischen diesen Geräten kann zu einer sehr vorteilhaften Verwendung des erfindungsgemäßen Verfahrens führen.

Darüber hinaus kann es sich bei dem Kommunikationssystem um ein stationäres Kommunikationssystem, insbesondere um ein Kommunikationssystem im Haushalt handeln. Dabei kann dieses sogenannte Multi-Media-Netzwerk-System aus den unterschiedlichsten Audio-, Video-, Steuer- und sonstige Daten erzeugenden und/oder verarbeitenden Komponenten zusammengesetzt sein.

Weitere vorteilhafte Ausführungsformen der Erfindung sind in den Unteransprüchen angegeben.

Ein Vorteil des erfindungsgemäßen Verfahrens besteht darin, daß Daten beliebiger Art sehr schnell und flexibel zwischen den verschiedenen Teilnehmern eines Kommunikationssystems übertragen werden können. Insbesondere können dabei Daten, beliebiger Länge sowie Steuerdaten, die nicht in dem die einzelnen Steuerdaten umfassenden "Befehlssatz" des Übertragungsformats vorhanden sind, übertragen werden.

Die Erfindung wird nachfolgend anhand eines Ausführungsbeispiels unter Bezugnahme auf die Zeichnung erläutert; in dieser zeigt:
- Fig. 1: die Aufteilung der Quell- und Steuerdaten bei Übertragung mit einem Format nach dem erfindungsgemäßen Verfahren und
- Fig. 2: ein aus einer Vielzahl von über einzelne Leitungsabschnitte verbundenen Komponenten bestehendes Netzwerk, bei dem die Übertragung von Daten zwischen den einzelnen Komponenten mittels des erfindungsgemäßen Verfahrens möglich ist.

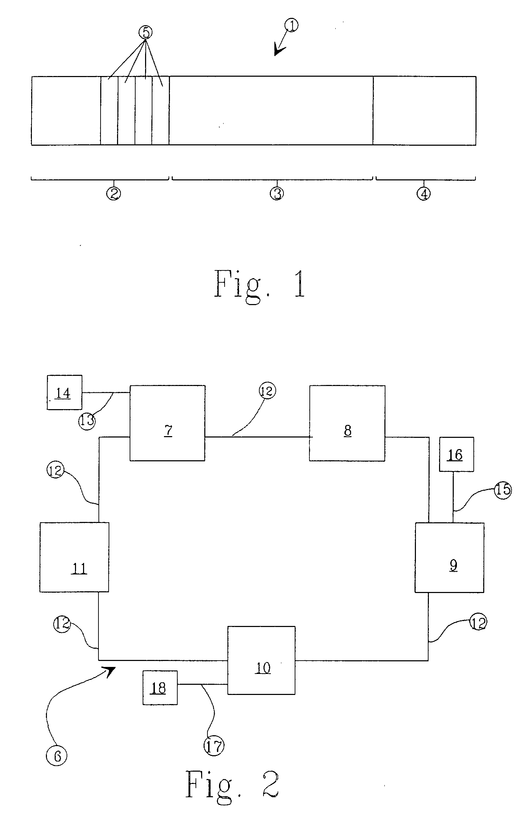

Fig. 1 zeigt eine Bitgruppe 1, welche die kleinste Einheit eines für die Übertragung von digitalen Daten verwendbaren Datenformats darstellt. Die Bitgruppe 1 ist in einen ersten Bereich 2 für Steuerdaten, einen Bereich 3 für Quelldaten und einen sich daran anschließenden zweiten Bereich 4 für weitere Steuerdaten unterteilt.

Der erste Bereich 2 umfaßt vier Bitpositionen 5, die für die Übertragung unformatierter Daten reserviert sind.

Fig. 2 zeigt ein ringförmig angeordnetes Kommunikationssystem 6, das aus Komponenten 7, 8, 9, 10, 11 besteht. Die Komponenten 7, 8, 9, 10, 11 sind über Lichtwellenleiterabschnitte 12 miteinander verbunden. Bei den Komponenten 7, 8, 9, 10, 11 handelt es sich dabei im einzelnen um einen CD-Spieler 7, einen Verstärker 8, einen Kassettenrekorder 9, eine Anzeigeeinheit 10 und Aktivboxen 11.

Der CD-Spieler 7 besitzt einen seriellen Eingang 13, der über eine Starttaste 14 ansteuerbar ist, so daß beim Drücken der Starttaste 14 die Wiedergabe einer eingelegten CD beginnt.

Der Kassettenrekorder 9 besitzt einen seriellen Eingang 15, der über eine Synchron-Aufnahme-Taste 16 ansteuerbar ist. Mit der Synchron-Aufhahme-Taste kann der Kassettenrekorder 9 in eine Synchron-Aufnahme-Bereitschaft versetzt werden, deren Funktion weiter unten näher beschrieben wird.

Die Anzeigeeinheit 10 besitzt einen seriellen Ausgang 17, über den ein Display 18 ansteuerbar ist.

Zur Übertragung beispielsweise von Audiodaten von dem CD-Spieler 7 über den Lichtwellenleiterabschnitt 12 zu dem Verstärker 8 werden die zu übertragenden Daten entsprechend dem gewählten Übertragungsformat formatiert und in zeitlich aufeinanderfolgenden Bitgruppen 1 von dem CD-Spieler 7 abgesandt.

Das erfindungsgemäße Verfahren kann beispielsweise wie im folgenden beschrieben verwendet werden, um synchron mit der Wiedergabe der CD die Aufnahme am Kassettenrekorder 9 zu starten:

Vor Starten der Wiedergabe der CD wird die Synchron-Aufnahme-Taste 16 des Kassettenrekorders 9 betätigt, wodurch dieser in eine Synchron-Aufnahme-Bereitschaft versetzt wird.

Beim Betätigen der Start-Taste 14 des CD-Spielers 7 werden von diesem Steuerdaten erzeugt. Diese werden unformatiert bitweise den Bitpositionen 5 aufeinanderfolgender Bitgruppen 1, die von dem CD-Spieler 7 abgesandt werden, zugewiesen.

Gleichzeitig werden zu Beginn der Übertragung der unformatierten Daten im zweiten für Steuerdaten reservierten Bereich 4 der ersten Bitgruppe 1 die Adressen des Kassettenrekorders 9 und der Anzeigeeinheit 10 sowie eine Anfangskennung und die Länge der unformatierten Datenfolge abgelegt.

Die aufeinanderfolgenden Bitgruppen 1 werden über den Lichtwellenleiterabschnitt 12 zu dem Verstärker 8 übertragen, wo die in den Bereichen 3 der Bitgruppen 1 abgelegten Audiodaten bearbeitet werden. Die den Bitpositionen 5 zugewiesenen unformatierten Daten werden vom Verstärker 8 nicht verwendet, da dieser nicht als Empfänger dieser unformatierten Daten durch die im zweiten Bereich 4 abgelegten Adreßdaten gekennzeichnet ist.

Nachdem die Bitgruppen 1 über den nächsten Lichtwellenleiterabschnitt 12 zu dem Kassettenrekorder 9 übertragen worden sind, erkennt dieser aufgrund der im zweiten Bereich 4 abgelegten Adreßdaten, daß er als Empfänger der unformatierten Daten bestimmt ist. Daraufhin werden von dem Kassettenrekorder 9 die den Bitpositionen 5 zugewiesenen unformatierten Steuerdaten entsprechend der ebenfalls im zweiten Bereich 4 abgelegten Anfangskennung und Länge ausgelesen und als internes Steuersignal zum Starten der Synchron-Aufnahme interpretiert. Auf diese Weise beginnt die Aufnahme am Kassettenrekorder 9 automatisch beim Starten der Wiedergabe des CD-Spielers 7 über die Start-Taste 14.

Da neben der Adresse des Kassettenrekorders 9 auch die Adresse der Anzeigeeinheit 10 im zweiten Bereich 4 der ersten übertragenen Bitgruppe 1 abgelegt ist, erkennt die Anzeigeeinheit 10 nach Empfang der Bitgruppen 1, daß sie ebenfalls als Empfänger der den Bitgruppen 5 zugeordneten unformatierten Daten bestimmt ist. Daher werden die unformatierten Daten von der Anzeigeeinheit 10 entsprechend der Anfangskennung und der Länge ausgelesen und als interne Steuerdaten interpretiert. Auf diese Weise kann zum Beispiel mit Start der Wiedergabe der CD auf dem Display 18 die Meldung "CD-Synchron-Aufnahme" angezeigt werden.

## Patentansprüche

1. Verfahren zur gemeinsamen Übertragung von digitalen Quellund Steuerdaten zwischen über Datenleitungen (12) verbundenen Datenquellen und -senken (7, 8, 9, 10, 11), bei dem die Quellund Steuerdaten in einem festgelegten Übertragungsformat übertragen werden, welches eine getaktete Folge von einzelnen Bitgruppen (1) gleicher Länge vorschreibt,
**dadurch gekennzeichnet,** dass in jeder Bitgruppe (1) zumindest eine Bitposition (5) für die Übertragung unformatierter Daten reserviert ist, wobei die unformatierten Daten ohne Umsetzung der unformatierten Daten auf das Übertragungsformat bitweise den reservierten Bitpositionen (5) aufeinanderfolgender Bitgruppen (1) zugewiesen und abhängig von den Steuerdaten einer bestimmten Datenquelle/Datensenke (7, 8, 9, 10, 11) zugeordnet werden.

2. Verfahren nach Anspruch 1,
**dadurch gekennzeichnet,** dass jeweils vor Beginn der Übertragung unformatierter Daten eine Anfangskennung als Steuerdatum übertragen wird.

3. Verfahren nach Anspruch 1 oder 2,
**dadurch gekennzeichnet,** dass jeweils vor Beginn der Übertragung unformatierter Daten die Länge der unformatierten Datenfolge als Steuerdatum übertragen wird.

4. Verfahren nach einem der vorhergehenden Ansprüche, dadurch gekennzeichnet, daß jeweils am Ende der Übertragung unformatierter Daten eine Endekennung als
Steuerdatum übertragen wird.

5. Verfahren nach einem der vorhergehenden Ansprüche,
**dadurch gekennzeichnet,** dass jeder Datensenke (8, 9, 10, 11) eine eindeutige Adresse zugeordnet wird, und dass jeweils vor Beginn der Übertragung unformatierter Daten die Adresse der Datensenke (8, 9, 10, 11), für die die unformatierten Daten bestimmt sind, als Steuerdatum übertragen wird.

6. Verfahren nach einem der vorhergehenden Ansprüche,
**dadurch gekennzeichnet,** dass jeder Datenquelle (7, 8, 9, 11) eine eindeutige Adresse zugeordnet wird, und dass jeweils vor Beginn der Übertragung unformatierter Daten die Adresse der Datenquelle (7, 8, 9, 11), die die unformatierten Daten aussendet, als Steuerdatum übertragen wird.

7. Verfahren nach einem der vorhergehenden Ansprüche, dadurch gekennzeichnet, daß als Datenleitungen (12) Lichtwellenleiter und/oder elektrische Leitungen verwendet werden.

8. Verwendung des Verfahrens nach einem der vorhergehenden Ansprüche bei einem Kommunikationssystem (6), das mehrere über ein Netzwerk miteinander. verbundene Teilnehmer (7, 8, 9, 10, 11) umfaßt, zur unformatierten Übertragung von Daten eines Teilnehmers (7, 8, 9, 10, 11) über das Netzwerk an einen anderen Teilnehmer (7, 8, 9, 10, 11).

9. Verwendung nach Anspruch 8, dadurch gekennzeichnet, daß das Netzwerk ringförmig aufgebaut ist.

10. Verwendung nach Anspruch 9, dadurch gekennzeichnet, daß es sich um ein mobiles Kommunikationssystem, insbesondere um ein Kommunikationssystem in einem Kraftfahrzeug handelt.

11. Verwendung nach Anspruch 8, dadurch gekennzeichnet, daß es sich um ein stationäres Kommunikationssystem, insbesondere um ein Kommunikationssystem im Haushalt handelt.

## Claims

1. Method for combined transmission of digital source and control data between data sources and sinks (7, 8, 9, 10, 11) linked by data transmission lines (12), in which the source and control data are transmitted in a fixed transmission format which prescribes a clock sequence of individual bit groups (1) of the same length, characterised in that, in each bit group (1), at least one bit position (5) is reserved for the transmission of unformatted data, the unformatted data, without the unformatted data being converted into the transmission format, being allocated bit by bit to the reserved bit positions (5) of sequential bit groups (1) and assigned to a particular data source/data sink (7, 8, 9, 10, 11) depending on the control data.

2. Method according to Claim 1, characterised in that a start identifier is transmitted as control data before the start of every transmission of unformatted data.

3. Method according to Claim 1 or 2, characterised in that the length of the unformatted data stream is transmitted as control data before the start of every transmission of unformatted data.

4. Method according to any one of the preceding claims, characterised in that an end identifier is transmitted as control data at the end of every transmission of unformatted data.

5. Method according to one of the preceding claims, characterised in that each data sink (8, 9, 10, 11) is allocated a unique address, and in that the address of the data sink (8, 9, 10, 11) for which the unformatted data is intended is transmitted as control data before the start of every transmission of unformatted data.

6. Method according to one of the preceding claims, characterised in that each data source (7, 8, 9, 11) is allocated a unique address, and in that the address of the data source (7, 8, 9, 11) which is sending out the unformatted data is transmitted as control data before the start of every transmission of unformatted data.

7. Method according to one of the preceding claims, characterised in that optical fibres and/or electrical cables are used as data transmission lines (12).

8. Use of the method according to one of the preceding claims, in a communications system (6) which comprises several subscribers (7, 8, 9, 10, 11) connected together via a network, for unformatted transmission of data from one subscriber (7, 8, 9, 10, 11) via the network to another subscriber (7, 8, 9, 10, 11) .

9. Use according to Claim 8, characterised in that the network is ring-configured.

10. Use according to Claim 9, characterised in that it is a mobile communications system which is involved, in particular a communications system in a motor vehicle.

11. Use according to Claim 8, characterised in that it is a stationary communications system which is involved, in particular a communications system in the household.

## Revendications

1. Procédé de transmission commune de données numériques sources et de commande entre des sources et des puits de données (7, 8, 9, 10, 11) reliés par des lignes de transmission de données (12), selon lequel, les données sources et les données de commande sont transmises selon un format de transmission fixe prescrit par une succession cadencée de groupes de bits (1), distincts de même longueur,
caractérisé en ce que
dans chaque groupe de bits (1), au moins une position de bits (5) est réservée pour la transmission de données non formatées, les données non formatées étant fournies sans être converties au format de transmission, bit par bit aux positions de bits réservées (5) dans des groupes de bits successifs (1), et attribuées en fonction des données de commande, à une certaine source de données/puits de données (7, 8, 9, 10, 11).

2. Procédé selon la revendication 1,
caractérisé en ce que
chaque fois avant le début de la transmission de données non formatées, on transmet une caractéristique de début comme donnée de commande.

3. Procédé selon la revendication 1 ou 2,
caractérisé en ce que
chaque fois avant le début de la transmission de données non formatées, on transmet la longueur de la suite de données non formatées comme donnée de commande.

4. Procédé selon l'une des revendications précédentes,
caractérisé en ce que
chaque fois à la fin de la transmission de données non formatées, on transmet une caractéristique de fin comme donnée de commande.

5. Procédé selon l'une des revendications précédentes,
caractérisé en ce qu'
à chaque puits de données (8, 9, 10, 11), on attribue une adresse bijective, et chaque fois avant le début de la transmission de données non formatées, on transmet comme donnée de commande, l'adresse des puits de données (8, 9, 10, 11) auxquels sont destinées les données non formatées.

6. Procédé selon l'une des revendications précédentes,
caractérisé en ce qu'
à chaque source de données (7, 8, 9, 11), on attribue une adresse bijective, et chaque fois avant le début de la transmission de données non formatées, on transmet comme donnée de commande, l'adresse de la source de données (7, 8, 9, 11) qui émet les données non formatées.

7. Procédé selon l'une des revendications précédentes,
caractérisé en ce que
comme lignes de données (12), on utilise des conducteurs de lumière et/ou des lignes électriques.

8. Application du procédé selon l'une des revendications précédentes à un système de communication (6) comprenant plusieurs participants (7, 8, 9, 10, 11) reliés par un réseau, pour la transmission non formatée de données d'un participant (7, 8, 9, 10, 11) par le réseau vers un autre participant (7, 8, 9, 10, 11).

9. Application de la revendication 8,
caractérisée en ce que
le réseau est construit de forme annulaire.

10. Application selon la revendication 9,
caractérisée en ce qu'
il s'agit d'un système de communication mobile, notamment d'un système de communication embarqué dans un véhicule automobile.

11. Application selon la revendication 8,
caractérisée en ce qu'
il s'agit d'un système de communication fixe notamment d'un système de communication domestique.
